# EUROPEAN PATENT SPECIFICATION

(11) **EP 3 579 686 B1**
(45) Date of publication and mention of the grant of the patent: **15.06.2022**
(21) Application number: 18750997.1
(22) Date of filing: 06.02.2018
(51) Int. Cl.: A01G 31/02, A01G 7/04

(54) **PLANT CULTIVATION SYSTEM**
PFLANZENANBAUSYSTEM
SYSTÈME DE CULTURE DE PLANTE

(30) Priority: 07.02.2017 US 201762455949 P
(43) Date of publication of application: 18.12.2019
(73) Proprietor: Grifa, Joseph, Niagara Falls, Ontario L2G 4X3 (CA)
(72) Inventor: Grifa, Joseph, Niagara Falls, Ontario L2G 4X3 (CA)
(74) Representative: Patentanwälte Bauer Vorberg Kayser
(86) International application number: PCT/CA2018/050129
(87) International publication number: WO 2018/145199

(56) References cited:
- CA-A1- 2 665 085
- CA-C- 2 392 424
- JP-A- H 089 785
- KR-B1- 100 801 133
- KR-B1- 101 358 497
- KR-Y1- 200 384 330
- KR-Y1- 200 410 854

## Description

### TECHNICAL FIELD

The present disclosure relates to plant cultivation systems.

### BACKGROUND

Conventional outdoor cultivation of food plants, practiced by mankind for millennia, is subject to considerable drawbacks, particularly in northern climates where the growing season is limited. While the growing season can be extended through indoor cultivation such as greenhouses or hydroponics, these approaches require ongoing supervision and maintenance, and are not particularly well suited to urban environments, where many people live in apartments or condominiums with limited space. At the same time, there is increasing recognition of the value of fresh, local produce to the human diet. A Plant cultivation Systems is known from document KR 10-1358497 B1, which describes a cultivation apparatus having a multilayered structure in order to cultivate a plurality of plants and enabling adjustment of the gap between upper and lower cultivation cases and rotation of the cultivation cases, and provides for water to be supplied to and drained from the cultivation cases.

KR200 384 330 Y1, KR 200 410 854 Y1, KR 100 801 133 B1, CA 2 665 085 A1 and JP H08 9785 A disclose step-up growers.

### SUMMARY

A plant cultivation system according to the invention has the features of claim 1.

In one aspect, a plant cultivation system comprises at least one plant support staircase. Each plant support staircase comprises a plurality of distinct individual plant receptacles including a zenith plant receptacle and a nadir plant receptacle. Each plant receptacle comprises a water basin adapted to contain water. The plant receptacles are arranged descendingly from the zenith plant receptacle to the nadir plant receptacle, and the plant receptacles are horizontally stepped so that each plant receptacle is vertically unobstructed by each ascendingly adjacent plant receptacle. The plant receptacles are configured so that water supplied to a zenith basin cascades down the plant support staircase through descendingly adjacent basins toward a nadir basin.

In some embodiments, the basins may comprise removable trays.

Water supplied to the zenith basin may cascade down the plant support staircase through cascade drains feeding into respective descendingly adjacent ones of the basins, or by overflowing into respective descendingly adjacent ones of the basins, or by some combination thereof. A reservoir may be coupled, via a flow control element, in fluid communication with the basins and adapted to selectively supply water to the zenith basin of each plant support staircase. The flow control element may comprise a pump, and the reservoir may be disposed within the enclosure below the basins. Alternatively, the reservoir may be disposed above the basins and the flow control element may comprise a valve. The nadir basin may have a terminal drain, and a pre-nadir basin preceding the nadir basin may also have a terminal drain. Where at least the nadir basin has a terminal drain, the each terminal drain(s) may be valve-controlled for selectively directing water from the nadir basin back to the reservoir, or to a sink.

In some embodiments, each plant support staircase comprises a staircase frame and a basin shield for each plant receptacle. Each basin shield may be supported by the staircase frame in registration with a respective one of the basins, with each basin shield having a pot aperture formed therein and adapted to receive a plant pot. When a flanged plant pot is received in the pot support aperture, the basin shield and the staircase frame cooperate to substantially exclude light from the respective basin. For each plant receptacle, the basin shield may be removably supported by the staircase frame.

In some embodiments, the plant support staircase(s) may be curved, and in particular embodiments a plurality of plant support staircases radiate from a common center, for example in a quadrelion arrangement.

A plant support staircase as described above is disposed within the interior volume of an enclosure. In such an embodiment, the enclosure has an access port opening into the interior volume and a closure movably coupled to the enclosure. The closure is movable between a closed position obstructing the access port and an open position permitting access to the interior volume through the access port. When the closure is in the closed position, the closure cooperates with the enclosure to substantially exclude external light from the interior volume while airflow into and out of the interior volume is permitted. At least one light source is disposed within the interior volume and adapted to illuminate the plant receptacles.

According to the invention, there is a respective light set for each plant receptacle, and each light set is arranged in registration with its respective plant receptacle. In particular embodiments, light sets in registration with the zenith plant receptacle emit spring-like light in which blue and yellow wavelengths predominate, and light sets in registration with the nadir plant receptacle emit fall-like light in which reddish and orange wavelengths predominate. The plant support staircase(s) may be rotatable within the enclosure, in which case the light sets may be carried by a fixture disposed within the enclosure and configured to rotate in synch with the at least one plant support staircase to maintain each light set in registration with its respective plant receptacle.

### BRIEF DESCRIPTION OF THE DRAWINGS

These and other features will become more apparent from the following description in which reference is made to the appended drawings wherein:
FIGURE 1 is an exploded top perspective view of a first exemplary plant cultivation system;
FIGURE 2 is a top perspective view of the plant cultivation system of Figure 1, with a closure thereof in an open position;
FIGURE 3 is a top perspective view of the plant cultivation system of Figure 1, with the closure thereof moving from the open position toward a closed position;
FIGURE 4 is a cross-sectional view of the plant cultivation system of Figure 1;
FIGURE 5 is an "unrolled" side elevation view of a plant support staircase of the plant cultivation system of Figure 1;
FIGURE 6 is an "unrolled" side elevation view of the plant support staircase of Figure 5 with potted plants disposed in plant receptacles thereof;
FIGURE 7A is a top perspective view showing the plant support staircases, turntable and annular trough of the plant cultivation system of Figure 1;
FIGURE 7B is a top plan view showing the plant support staircases, turntable and annular trough of the plant cultivation system of Figure 1;
FIGURES 8A and 8B are side cut-away views of a portion of a plant support staircase of the plant cultivation system of Figure 1, illustrating indexing of potted plants down the plant support staircase;
FIGURES 9A to 9C are top perspective views of a portion of a plant support staircase of the plant cultivation system of Figure 1, illustrating indexing of potted plants down the plant support staircase;
FIGURE 10 is a side cut-away view of a portion of a plant support staircase of the plant cultivation system of Figure 1, illustrating cascading of water down the plant support staircase;
FIGURE 11 is a top perspective view of a portion of a plant support staircase of the plant cultivation system of Figure 1, illustrating cascading of water down the plant support staircase;
FIGURE 12A is a bottom plan view of a light fixture of the plant cultivation system of Figure 1;
FIGURE 12B is a bottom perspective view of the light fixture of Figure 12A;
FIGURE 13A is a cut-away top perspective view of a zenith plant receptacle and zenith basin shield, with the zenith basin shield in a closed configuration;
FIGURE 13B is a cut-away top perspective view of the zenith plant receptacle and zenith basin shield of Figure 13A, with the zenith basin shield in an open configuration;
FIGURE 14 is a cross-sectional view of a second exemplary plant cultivation system;
FIGURE 15 is an exploded top perspective view of the plant cultivation system of Figure 14;
FIGURE 16A is a top perspective view showing the plant support staircases, turntable and annular trough of the plant cultivation system of Figure 14;
FIGURE 16B is a top plan view showing the plant support staircases, turntable and annular trough of the plant cultivation system of Figure 14;
FIGURES 17A to 17F are top perspective views of a portion of a plant support staircase of the plant cultivation system of Figure 14, illustrating indexing of potted plants down a plant support staircase thereof;
FIGURES 18A and 18B are partial cut-away views showing details of the pre-nadir basin and nadir basin of a plant support staircase of the plant cultivation system of Figure 14;
FIGURE 18C is a partial cut-away view showing use of removable trays in a plant support staircase of the plant cultivation system of Figure 14; and
FIGURES 19A to 19D show an exemplary basin shield for a plant support staircase of the plant cultivation system of Figure 14.

### DETAILED DESCRIPTION

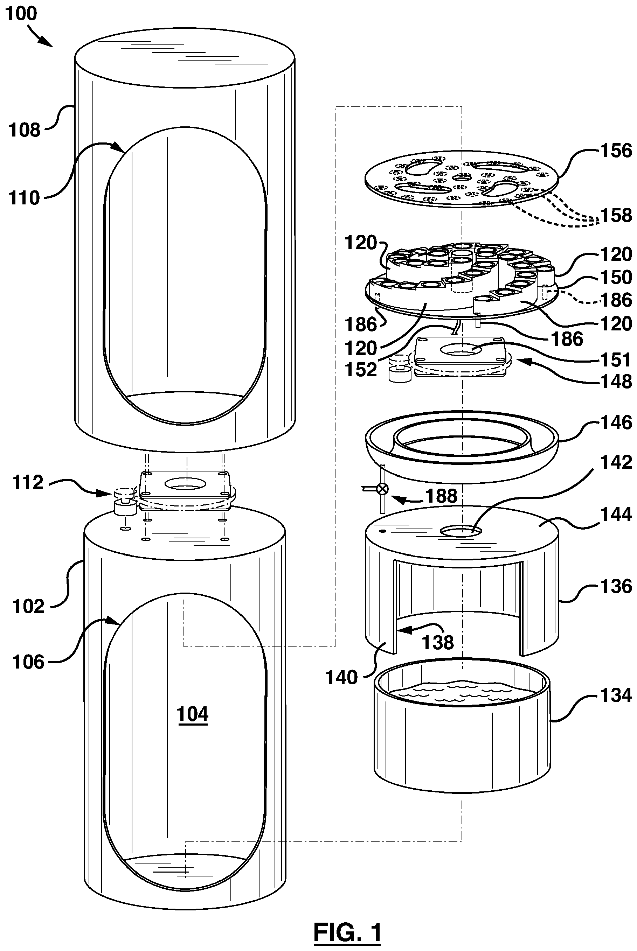

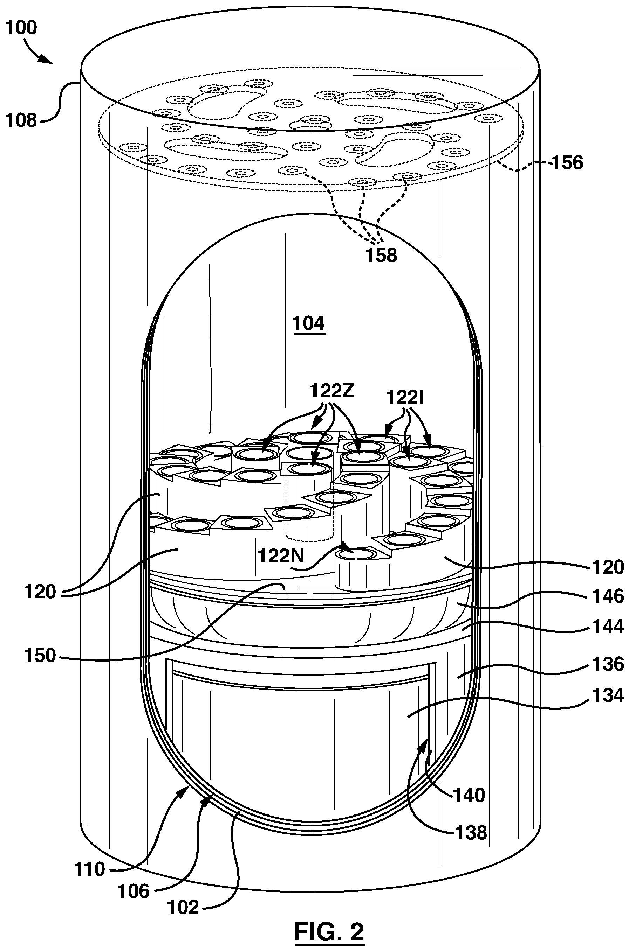

Reference is now made to Figures 1 to 3, which show a first exemplary embodiment of a plant cultivation system, denoted generally by reference 100, according to an aspect of the disclosure. The plant cultivation system 100 comprises an enclosure 102 defining an interior volume 104, with the enclosure 102 having an access port 106 opening into the interior volume 104. In the illustrated embodiment, the enclosure 102 takes the form of a hollow cylinder and the access port 106 is generally ovoid although other suitable shapes may be used for the enclosure 102 and/or access port 106. The enclosure 102 may be of any desired size suitable for the plants being cultivated; for example, and without limitation, the enclosure 102 may be 2 feet, 3 feet, 4 feet or 5 feet (about 61, 91, 122 or 152 cm) in diameter. A closure 108 is movably coupled to the enclosure 102. In the illustrated embodiment, the closure 108 is in the form of a hollow cylinder that is slightly larger in diameter than the enclosure 102, with the enclosure 102 nesting coaxially inside the closure 108. The closure 108 has an opening 110 which is also generally ovoid and roughly co-extensive with the access port 106 in the enclosure 102. The closure 108 is movably coupled to the enclosure 102 by way of a motor and gearing mechanism 112 so that the closure 108 is rotatable about the enclosure 102 whereby the opening 110 in the closure 108 can be moved into and out of registration with the access port 106 in the enclosure 102. Thus, the closure 108 is movable between a closed position in which the closure 108 obstructs the access port 106, i.e. the opening 110 is out of registration with the access port 106, and an open position permitting access to the interior volume 104 through the access port 106, i.e. the opening 110 is in registration with the access port 106. Bushings and/or bearings (not shown) may be interposed between the enclosure 102 and the closure 108 to facilitate smooth rotational movement. The cylindrical shape of the enclosure 102 and closure 108 allows the plant cultivation system 100 to be conveniently placed in a corner of a room in a dwelling. For example, the plant cultivation system 100 may be placed in the corner of a kitchen.

The use of the motor and gearing mechanism 112 to couple the closure 108 to the enclosure 102 allows for precise electronic control of movement of the closure between the closed position and the open position. The motor may be coupled to a switch, button or other interface, or to a wireless receiver to enable remote control, or to a computer, microcontroller, PLC or similar device to control actuation of the motor. In other embodiments, the closure 108 may simply be mechanically coupled to the enclosure 102 so as to be rotatable thereabout, without any motor or other actuator, and closure 108 may be rotated manually about the enclosure 102 between the closed position and the open position. The use of nested cylinders is merely one exemplary implementation of a closure arrangement, and other suitable closure arrangements may also be used.

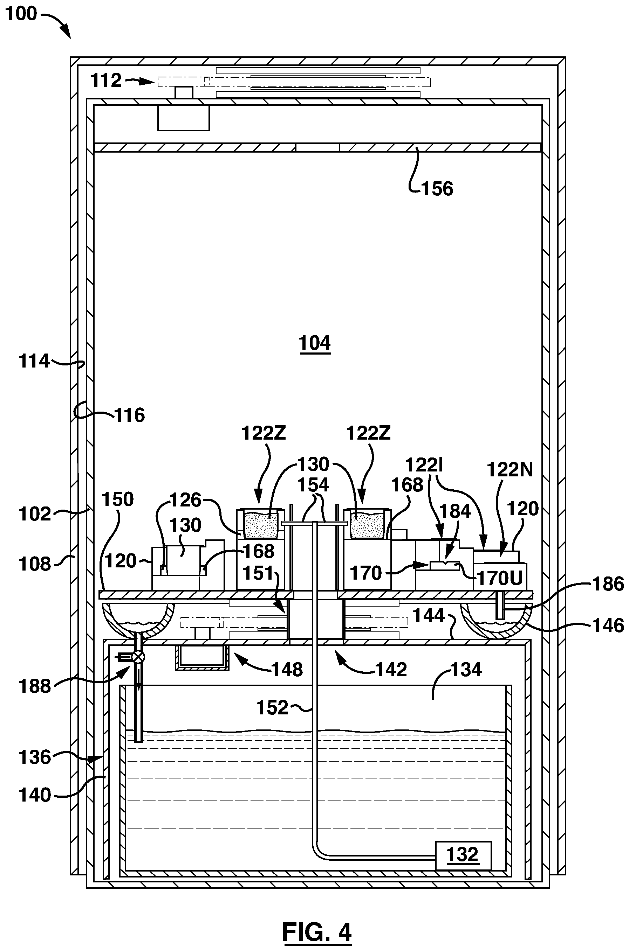

Preferably, the closed position has the closure 108 rotated 180 degrees from the open position so that the opening 110 is as far out of registration with the access port 106 as possible. Accordingly, when the closure 108 is in the closed position, the closure 108 cooperates with the enclosure 102 to substantially exclude external light from the interior volume 104 while airflow into and out of the interior volume 104 is permitted. More particularly, as can be seen in the cross-sectional view shown in Figure 4, while there is no linear path by which external light can reach the internal volume 104 when the closure 108 is in the closed position, air can still flow into and out of the interior volume 104 by flowing between the inner surface 114 of the closure 108 and the outer surface 116 of the enclosure 102. Optionally, vents can be provided in the body of the enclosure 102 so long as they do not inhibit the combination of the enclosure 102 and closure 108 from being substantially light-tight when the closure 108 is in the closed position. In some embodiments, one or more fans (not shown) may be provided to facilitate air flow through the enclosure 102.

A plurality of plant support staircases 120 are disposed within the interior volume 104. In the illustrated embodiment, four plant support staircases 120 are disposed within the interior volume 104 in a quadrelion arrangement, that is, the four plant support staircases are curved in the same direction and radiate from a common center which, in the illustrated embodiment, is in registration with the axes of the closure 108 and the enclosure 102. The quadrelion arrangement is merely one exemplary plant support staircase configuration, and other suitable configurations may also be used. Moreover, there may be more than four plant support staircases or fewer than four plant support staircases. For example, and without limitation, a triskelion arrangement of three plant support staircases may be used. Similarly, while a curved configuration of the plant support staircases is preferred for efficient utilization of space, linear configurations are also contemplated.

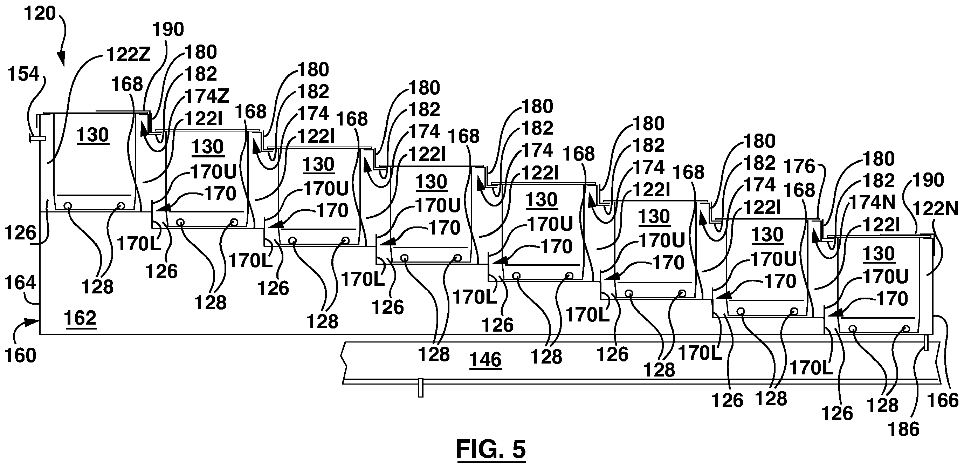

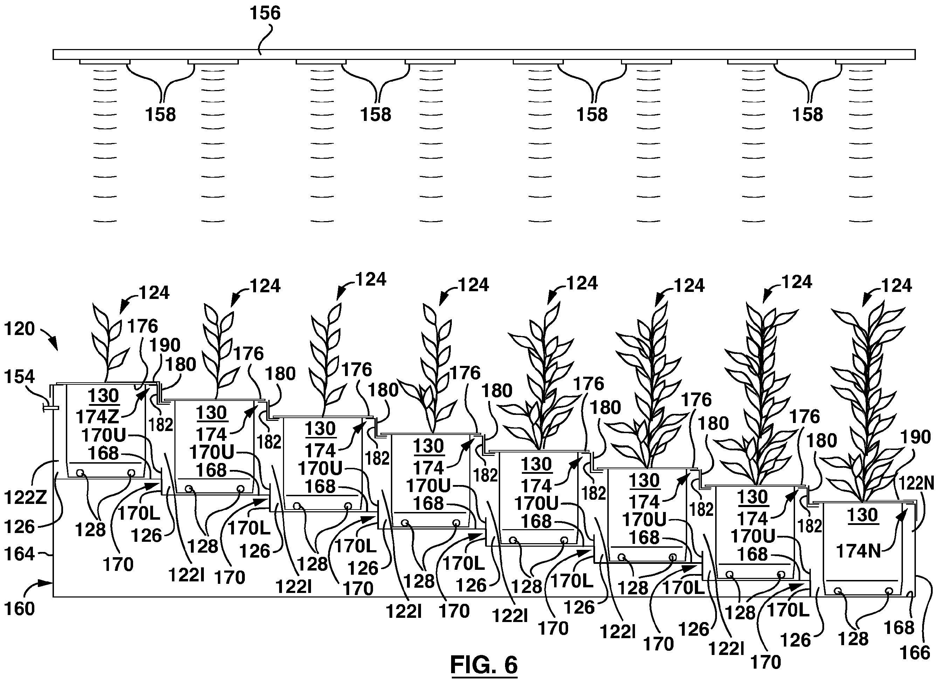

As best seen in Figures 5 and 6, which shows a side view of one of the plant support staircases 120 "unrolled" from its curved configuration, each plant support staircase 120 comprises a plurality of distinct individual plant receptacles, including a zenith plant receptacle 122Z, a plurality of intermediate plant receptacles 1221 and a nadir plant receptacle 122N. The plant receptacles 122Z, 1221, 122N are distinct individual plant receptacles in that each is adapted to receive and support a single potted plant 124 (see Figure 6), and are arranged descendingly from the zenith plant receptacle 122Z to the nadir plant receptacle 122N so that when the plant support staircase 120 is upright, the zenith plant receptacle 122Z is the highest and the nadir plant receptacle 122N is the lowest. As can be seen in the drawings, the plant receptacles 122Z, 1221, 122N are horizontally stepped so that each plant receptacle 122Z, 1221, 122N is vertically unobstructed by each ascendingly adjacent plant receptacle 122Z, 1221, 122N. This arrangement allows potted plants 124 at different stages of maturity to be arranged so that the tops of the potted plants 124 are all at a roughly equal height, as shown in Figure 6. Each plant receptacle 122Z, 1221, 122N comprises a water basin 126 adapted to contain water that can be absorbed by a potted plant 124 disposed within that plant receptacle 122Z, 1221, 122N by way of apertures 128 at the base of the pot 130 that contains the soil in which the potted plant 124 grows. While the exemplary embodiment shows each plant receptacle 122Z, 1221, 122N being at a different height, it is also contemplated that plant support staircases may be arranged so that there are multiple plant receptacles at each "step". In such embodiments, each plant receptacle may comprise its own exclusive basin, or it may comprise a basin shared with its neighbor.

While water may be supplied to the basins 126 manually, in preferred embodiments the plant cultivation system also includes a reservoir coupled, via a flow control element, in fluid communication with the basins 126 and adapted to selectively supply water to the basins 126. In the illustrated embodiment, the flow control element is a pump 132 (see Figure 4) and the reservoir 134 is disposed within the enclosure below the basins. More particularly, and with reference to Figures 1 to 3 and to Figure 1 in particular, the illustrated reservoir 134 takes the form of an open-topped hollow cylinder disposed within a support 136 taking the form of an open-bottomed cylinder with a cut-out 138 in its sidewall 140 and an axially aligned opening 142 in its superior (upper) end surface 144. The cut-out 138 provides access to the reservoir 134 so that water can be added; optionally the reservoir 134, cut-out 138, access port 106 and opening 110 may be sized to permit the reservoir 134 to be removed from the enclosure 102 for periodic cleaning and/or to facilitate refilling. Also optionally (not shown), the reservoir may be coupled to plumbing for refilling, for example by way of an automated valve (not shown) controlled by a level sensor (not shown). In some embodiments, the reservoir 134 may be provided with a pH controller (not shown) for maintaining a desired pH range for the water. Plant nutrients may be mixed into the water in the reservoir 134 to nourish the plants. Optionally, an automated dispenser (not shown) may be provided to dispense metered quantities of plant nutrients, for example according to a pre-set schedule.

In the illustrated embodiment, as can be seen in Figures 1 to 5 an annular trough 146 is supported on the superior end surface 144 of the support 136 to provide for water collection and drainage, as described further below. As seen in Figures 1 and 4, a motor and gearing mechanism 148 is also supported by the superior end surface 144 of the support 136, inwardly of the annular trough 146. The motor and gearing mechanism 148 couples the support 136 to a turntable 150 that carries the plant support staircases 120 to enable the turntable 150 (and hence the plant support staircases) to rotate relative to the support 136. As best seen in Figure 1, the motor and gearing mechanism 148 includes an aperture 151 in registration with the axially aligned opening 142 in the superior end surface 144 of the support 136; this permits a fluid conduit 152 (see Figure 4) to pass through the axially aligned opening 142 and the aperture 151 for fluid communication of water from the reservoir 134 to the zenith basins 126, that is, the basins of the zenith plant receptacles 122Z. More particularly, the pump 132 propels water from the reservoir 134 through the fluid conduit 152 to feeder tubes 154 that communicate with respective ones of the zenith basins 126 to supply water to the zenith basins 126, as will be discussed further below. Although not shown for simplicity of illustration, the fluid conduit 152 may incorporate a rotary union to accommodate rotation of the turntable 150 and plant support staircases 120; alternatively the pump 132 and fluid conduit 152 may be carried by the turntable 150 and suspended into the reservoir 134 to freely rotate therewithin.

As seen in Figures 1, 2 and 4, a light fixture 156 carrying a plurality of light sources, arranged into individual light sets 158, is disposed within the interior volume 104, above the plant support staircases 120, and is adapted to illuminate the plant receptacles 122Z, 1221, 122N so as to provide light to the potted plants 124 disposed therein. Particular exemplary lighting arrangements are described in further detail below.

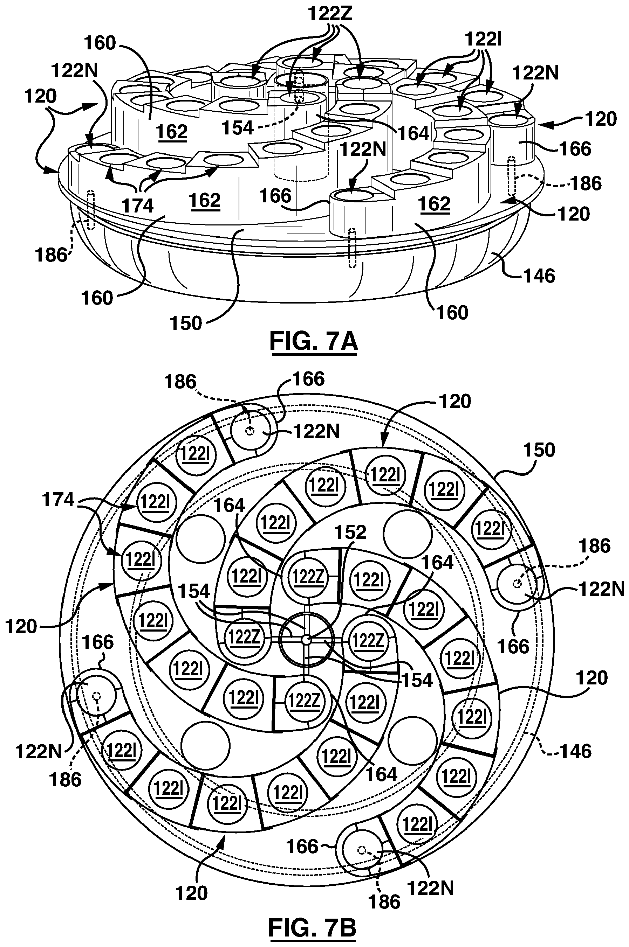

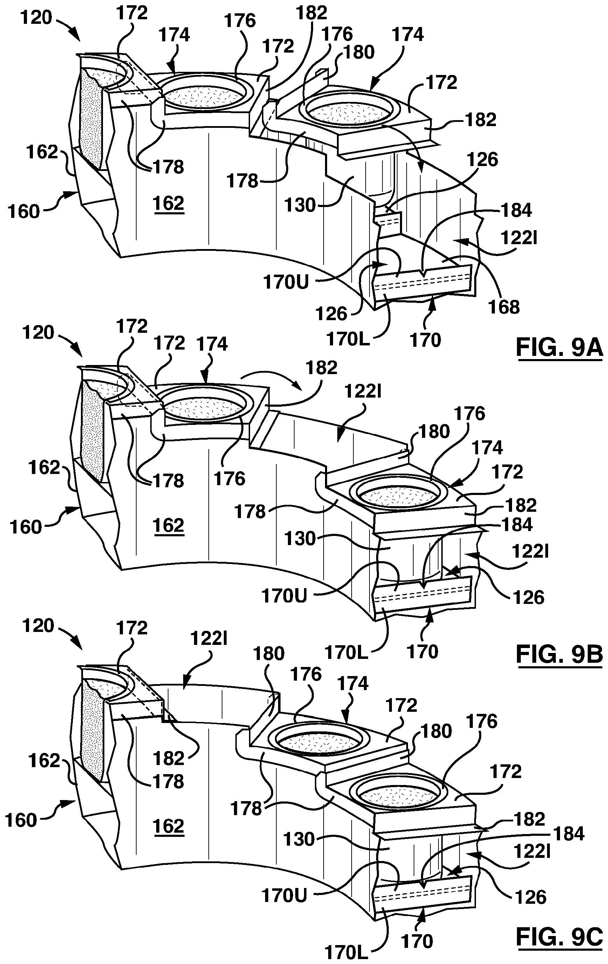

Reference is now made to Figures 7A to 9C, which show the configuration and construction of the exemplary plant support staircases 120 in more detail. As best seen in Figures 9A to 9C, each plant support staircase 120 comprises a staircase frame 160 formed from two opposed, spaced-apart curved sidewalls 162. The sidewalls 162 merge at the ends of the plant support staircase 120 to form a zenith end wall 164 and a nadir end wall 166 (see Figure 7A). Basin floors 168 and basin divider walls 170 extend between the sidewalls 162 in sealing relation therewith to form the basins 126. The basin divider walls 170 project both superiorly and inferiorly from the basin floors 168 so that, for a given basin divider wall 170, the superior (upper) portion 170U forms a nadir-side basin wall of the basin 126 that is closer to the zenith end wall 164 and the inferior (lower) portion 170L forms a zenith-side basin wall of the basin 126 that is closer to the nadir end wall 166.

Each plant support staircase 120 further comprises a basin shield 172Z, 172 and 172N for each plant receptacle 122Z, 1221 and 122N, respectively. The basin shields 172Z, 172 and 172N are supported by the staircase frame 160 in registration with a respective one of the basins 126.

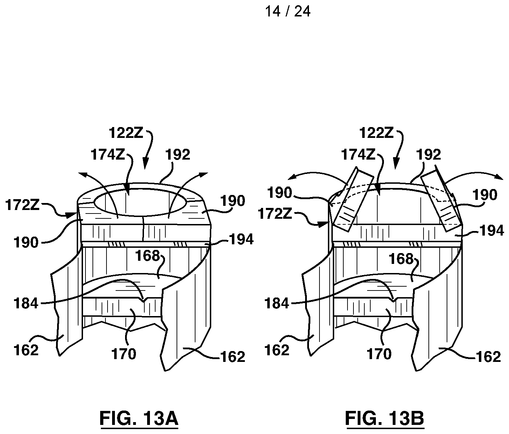

Referring now to Figures 13A and 13B, the zenith basin shield 172Z for the zenith plant receptacle 122Z comprises a pair of opposed panels 190 hinged to the sidewalls 162 of the staircase frame 160, a curved distal light baffle 192 and an L-shaped proximal light baffle 194. The panels 190 have curved edges which cooperate with the curved distal light baffle 192 to form a pot support aperture 174Z. The panels 190 are movable between a closed configuration, shown in Figure 13A, and an open configuration, shown in Figure 13B. In the closed configuration, the panels 190 overlap an outwardly projecting annular flange 176 on the plant pot 130 (not shown in Figures 13A and 13B) and overlap the proximal light baffle 194, and also slightly overlap one another. As such, when the panels 190 are in the closed configuration, the panels 190, annular flange 176 and proximal light baffle 194 cooperate with the staircase frame 160 to substantially exclude light from the basin 126 of the zenith plant receptacle 122Z as long as a basin shield 172 is disposed over the adjacent basin 126. The annular flange 176 on the plant pot 130 may rest on the curved distal light baffle 192 to support the plant pot 130 with the bottom of the plant pot 130 spaced from the basin floor 168. Alternatively, the plant pot 130 may rest on the basin floor 168, with the annular flange 176 on the plant pot 130 below the curved distal light baffle 192. The nadir basin shield 172N (not shown in Figures 13A and 13B) is of similar construction to the zenith basin shield 172Z, and likewise comprises a pair of opposed panels 190 hinged to the sidewalls 162 of the staircase frame 160, a curved distal light baffle 192 and an L-shaped proximal light baffle 194.

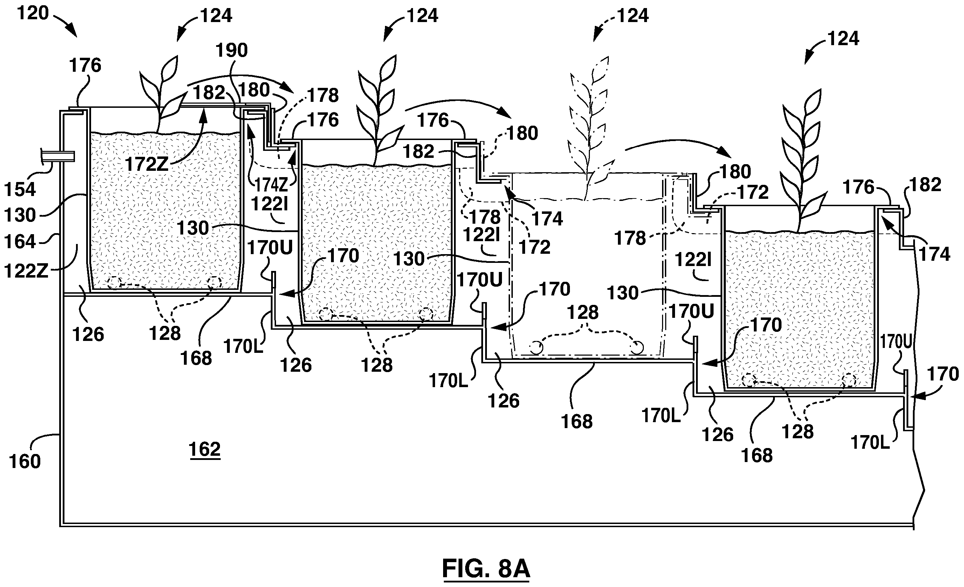

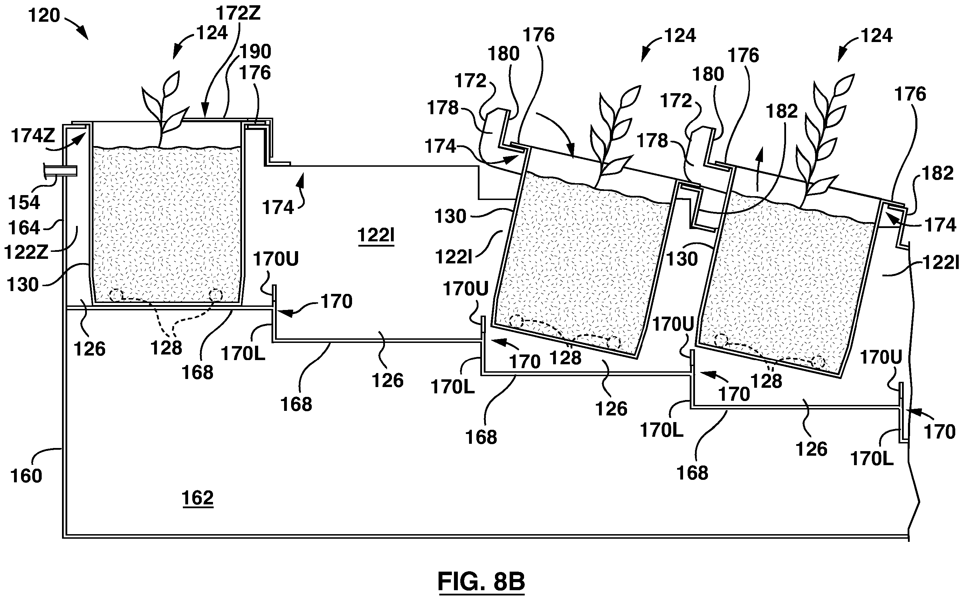

As best seen in Figures 8A and 8B, the basin shields 172 for the plant receptacles 1221 located between the zenith plant receptacle 122Z and the nadir plant receptacle 122N are supported by the staircase frame 160 in registration with a respective one of the basins 126. Each basin shield 172 has a pot support aperture 174 formed therein and adapted to receive a flanged plant pot 130; the outwardly projecting annular flange 176 on the plant pot 130 supports the plant pot 130 in the pot support aperture 174 so that the bottom of the plant pot 130 can be spaced from the basin floor 168.

The basin shields 172 are supported on the upper edges of the sidewalls 162 of the staircase frame 160, and include light baffles which, when a flanged plant pot 130 is received and supported in the pot support aperture 174, cooperate with the staircase frame 160 to substantially exclude light from the basins 126. In the illustrated embodiment, the light baffles include sidewall light baffles 178 which outwardly overlap the sidewalls 162 of the staircase frame 160, as well as complementary L-shaped zenith-side light baffles 180 and nadir-side light baffles 182. The zenith-side light baffles 180 of each basin shield 172 outwardly overlap the nadir-side light baffles 182 of the ascendingly adjacent basin shield 172. The outwardly projecting annular flange 176 on the plant pot 130 also acts as a light baffle for the pot support aperture 174. Exclusion of light from the basins 126 is advantageous because it inhibits growth of algae in the basins 126.

As noted above, the use of plant support staircases 120 allows potted plants 124 at different stages of maturity to be arranged so that the tops of the potted plants 124 are all at a roughly equal height. Thus, the tallest plant 124 would be in the nadir plant receptacle 122N and the shortest plant 124 would be in the zenith plant receptacle 122Z. In currently preferred embodiments, each basin shield 172 is removably supported by the staircase frame 160 to facilitate re-positioning of the potted plants 124 as the plants 124 grow by indexing the plants 124 descendingly along the plant support staircase 120.

Each basin shield 172 between the zenith basin shield 172Z and the nadir basin shield 172N is removably supported by the staircase frame 160 to facilitate re-positioning of the potted plants 124. In particular, because the annular flange 176 on the plant pot 130 supports the plant pot 130 in the pot support aperture 174, when a basin shield 172 is lifted away from the staircase frame 160, the potted plant 124 will be lifted with the basin shield. Accordingly, when the potted plant 124 in the nadir plant receptacle 122N has reached a sufficient height that it has "outgrown" the plant cultivation system 100, the nadir basin shield 172N may be opened by moving its panels 190 to the open configuration, and the potted plant 124 disposed in the nadir plant receptacle 122N may be removed from the staircase frame 160. The basin shield 172 disposed over the ascendingly adjacent intermediate plant receptacle 1221 can then be lifted away from the staircase frame 160, along with the respective potted plant 124, and the potted plant 124 can then be extricated from the basin shield 172 and repositioned in the nadir plant receptacle 122N, whose panels 190 can then be moved back to the closed configuration. The basin shield 172 disposed over the next ascendingly adjacent intermediate plant receptacle 1221 can then be lifted away from the staircase frame 160, along with the respective potted plant 124, and repositioned, with the respective potted plant 124, over the (now vacant) intermediate plant receptacle 1221 that is immediately adjacent the nadir plant receptacle 122N. The process can then be repeated by moving the basin shield 172 and potted plant 124 from the next ascendingly adjacent intermediate plant receptacle 1221 to the descendingly adjacent vacated intermediate plant receptacle 1221, as shown in Figures 8A to 9C, until the basin shield 172 and potted plant 124 adjacent the zenith plant receptacle 122Z have been moved. The potted plant 124 in the zenith plant receptacle 122Z can then be removed (by moving the panels 190 of the zenith basin shield 172Z to the open configuration) and inserted into the pot support aperture 174 of the basin shield 172 that was removed from the intermediate plant receptacle 1221 adjacent the to the nadir plant receptacle 122N. This assembly (potted plant 122 and basin shield 172) can then be installed in the intermediate plant receptacle 1221 adjacent the zenith plant receptacle 122Z. A new (e.g. seedling) potted plant 124 can then be installed in the zenith plant receptacle 122Z. Because the plant support staircases 120 are carried by a turntable 150 that can rotate relative to the support 136, they can be rotated within the enclosure 102 so that they can be more easily reached through the access port 106.

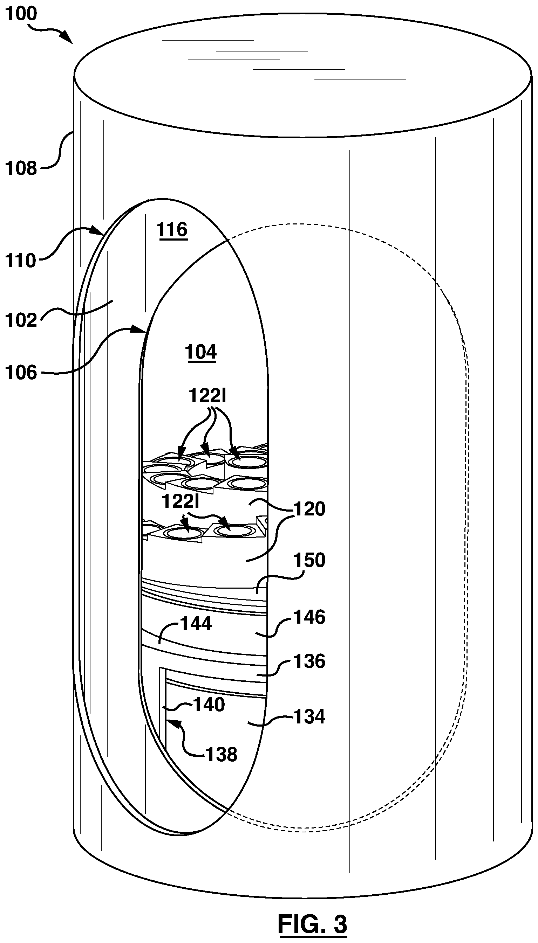

As described above, the pump 132 propels water from the reservoir 134 through the fluid conduit 152 to feeder tubes 154 that communicate with respective ones of the zenith basins 126 to supply water to the zenith basins 126 (see Figure 3). In preferred embodiments, the plant receptacles are configured so that water supplied to the zenith basin 126 cascades down the plant support staircase 120 through descendingly adjacent basins 126 toward the nadir basin 126.

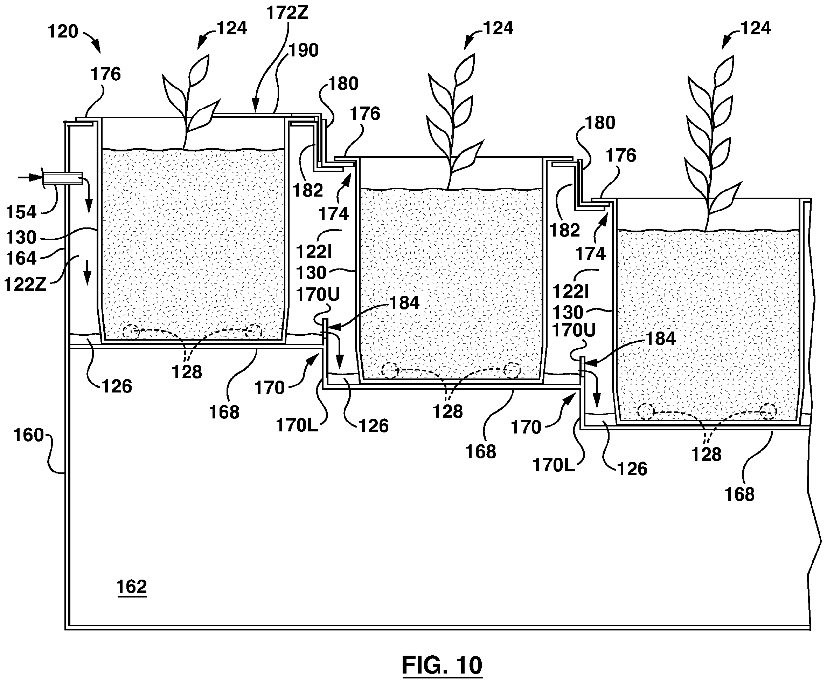

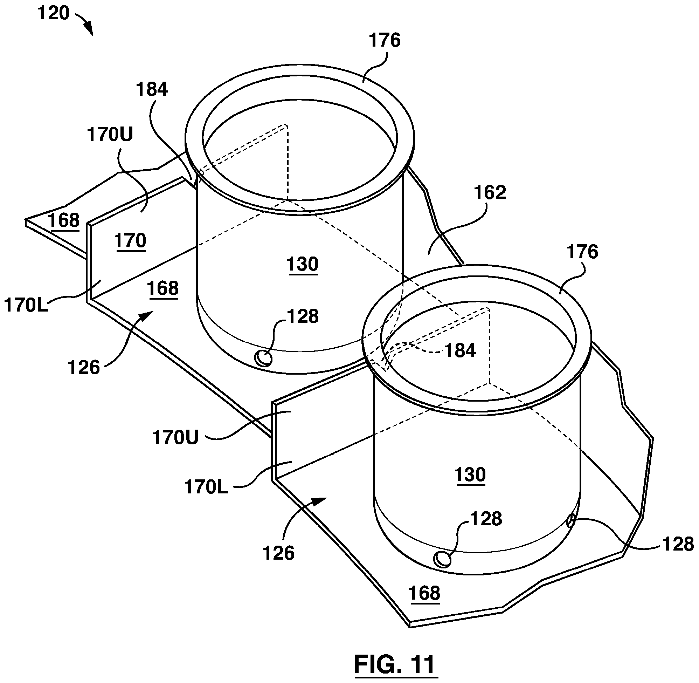

With reference now to Figures 10 and 11, within each plant support staircase 120, each of the basins 126, other than the nadir basins 126, that is, the basins of the nadir plant receptacles 122N, has a cascade drain 184 feeding into its respective descendingly adjacent basin 126. The cascade drains 184 enable water supplied from the reservoir 134 to the zenith basin 126 to cascade down the plant support staircase 120 through the basins 126 into the nadir basin 126, as shown by the arrows in Figure 10. As best seen in Figure 11 (see also Figures 9A to 9C), in the illustrated embodiment the cascade drains 184 take the form of V-shaped notches 184 in the superior portions 170U of the basin divider walls 170. The notches 184 are positioned so that a predetermined level of water will remain in the basin 126, and when the water rises above that level it will spill through the notch into the descendingly adjacent basin 126. While only a single notch is shown in each of the basin divider walls 170, in other embodiments a plurality of notches may be provided in each of the basin divider walls 170. Alternatively, apertures may be formed through the superior portions 170U of the basin divider walls 170 at a desired level; however the illustrated notches 184 are preferred because they are less likely to be obstructed by roots of the potted plants 124. Where apertures are used, the apertures may be covered by suitably porous screens to inhibit root obstruction.

The nadir basin 126 has a terminal drain comprising a tube 186 that depends into the annular trough 146 (see Figures 4 and 5). As indicated above, the plant support staircases 120 are carried by a turntable 150 that can rotate relative to the support 136; the tube 186 will traverse the annular trough 146 as the turntable 150 rotates so that water draining from the nadir basin 126 will be collected in the annular trough 146 regardless of the rotational position of the turntable 150 (see Figure 7A). As best seen in Figures 1 and 4, the annular trough 146 includes a valve-controlled outlet 188 which can selectively direct water in the annular trough 146 either back to the reservoir 134 or to an external sink (e.g. a drainage connection to a sewage line). Thus, by cooperation with the valve-controlled outlet 188, the terminal drain 186 of each nadir basin 126 is valve-controlled for selectively directing water from the nadir basin 126 back to the reservoir 134 or to a sink. Without promising any particular utility, because the water supplied from the reservoir 134 cascades through the basins rather than remaining static, it may assist in flushing away waste products released by the potted plants 124. As such, water may be recycled from the basins 126 to the reservoir 134 for a period of time and then flushed to an external sink and the reservoir 134 cleaned and refilled, or the water may simply be continuously flushed from the basins to an external sink.

In the illustrated embodiment, the reservoir 134 is disposed below the basins 126 and within the enclosure 102 for the sake of compactness; this is merely one exemplary implementation. The reservoir need not be disposed inside the enclosure; moreover, in other embodiments (not shown), the reservoir may be disposed above the basins; and may feed water into the basins via gravity, with a valve being used as the flow control element. As used in this context the word "above" refers to the reservoir being higher than the basins in a gravitational sense and does not require that the reservoir be in registration with the basins.

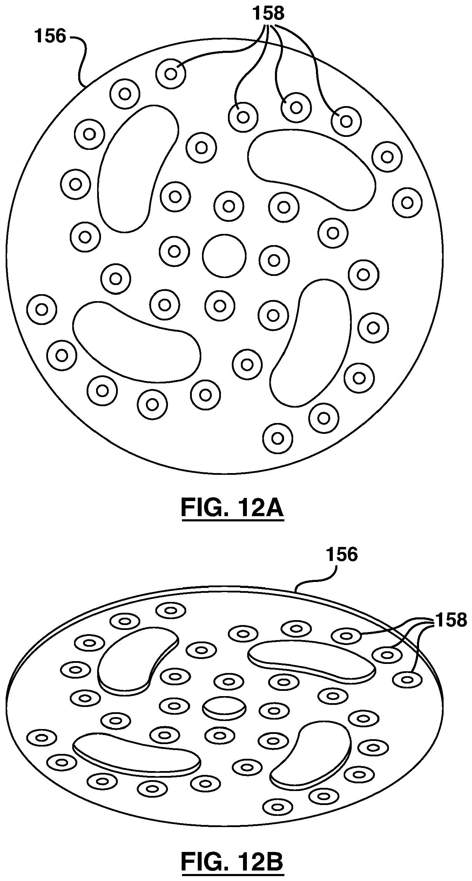

As noted above, a light fixture 156 carrying a plurality of light sources is disposed within the interior volume 104, above the plant support staircases 120, to illuminate the plant receptacles 122Z, 1221, 122N and provide light to the potted plants 124 disposed therein. In the exemplary illustrated embodiment, the light sources are arranged to form individual light sets 158, with there being one such light set for each of the plant receptacles 122Z, 1221, 122N. A "light set" may consist of one light source, or a plurality of light sources. Preferably, the light sources are light-emitting diodes (LEDs). With reference now to Figures 12A and 12B, an exemplary construction for the light fixture 156 will now be described in more detail. Each light set 158 is arranged in registration with its respective plant receptacle 122Z, 1221, 122N (see Figures 1, 2 and 6). More particularly, as can be seen by comparing Figures 12A and 7B, in the illustrated embodiment the light sets 158 are positioned in a quadrelion arrangement complementary to the quadrelion arrangement of the plant receptacles 122Z, 1221, 122N so that each light set 158 is in registration with a respective pot support aperture 174. Since in the illustrated embodiment the plant support staircases 120 are rotatable within the enclosure, the light fixture 156 is configured to rotate in synch with the turntable 150, and therefore in synch with the plant support staircases 120, so that each light set 158 is maintained in registration with its respective plant receptacle 122Z, 1221, 122N. For example, in one embodiment the light fixture 156 may be carried by pillars (not shown) extending from the turntable 150 so that the light fixture 156 and the turntable 150 rotate together. In another embodiment, the light fixture 156 may be mechanically coupled, for example by gearing, to the turntable 150 so as to rotate with the turntable 150. In yet another embodiment, the light fixture 156 may be driven by a motor and gearing mechanism (not shown) that is distinct from but synchronized with the motor and gearing mechanism 148 that drives the turntable 150.

Without promising any particular utility, by having each light set 158 in registration with a respective plant receptacles 122Z, 1221, 122N, each plant receptacle 122Z, 1221, 122N, and hence each potted plant 124, may be provided with individually tailored light to mimic the sunlight that would be received during the natural growing season. Blue and yellow wavelengths seem to be predominant during the spring whereas the low sun in the fall yields very reddish and orange wavelengths. Since the potted plants 124 can be indexed along the plant support staircases 120 as they grow, the light sets 158 may be configured so that each potted plant 124 receives a different range of light wavelengths depending on its position in the plant support staircase 120, which in turn depends on the maturity of the potted plant 124. Younger, and hence shorter, potted plants 124 will be positioned closer to (or in) the zenith plant receptacle 122Z and may receive more spring-like light (i.e. blue and yellow wavelengths predominate) whereas taller, and hence more mature, potted plants 124 will be positioned closer to (or in) the nadir plant receptacle 122Z and may receive more fall-like light (i.e. reddish and orange wavelengths predominate). The light sets 158 may comprise groups of LEDs each producing a narrow band of wavelengths which, when combined with the other LEDs in the light set 158, produces the desired spectrum of light. Energy wastage may be avoided by only producing light in the wavelengths that are most beneficial to the potted plants 124. Optionally, the light emitted by the light sets 158 may be further tuned for the particular type of potted plant 124.

Additionally, as noted above and as seen in Figure 6, the plant receptacles 122Z, 1221, 122N are arranged descendingly from the zenith plant receptacle 122Z to the nadir plant receptacle 122N, which allows potted plants 124 at different stages of maturity to be arranged so that the tops of the potted plants 124 are all at a roughly equal height. As a result, the tops of the potted plants 124 will all be at approximately equal distance from the respective light sets 158, and the less mature potted plants 124 will not receive less light than the more mature potted plants 124.

Thus, the exemplary plant cultivation systems described herein enables a method of cultivating plants comprising positioning a plant in registration with a first light set emitting light in a first spectrum tuned to a first maturity level of the plant, and, when the plant reaches a second maturity level, moving the plant into registration with a second light set emitting light in a second spectrum tuned to the second maturity level. When the plant reaches a third maturity level, the plant can then be moved into registration with a third light set emitting light in a third spectrum tuned to the third maturity level, and so on.

Plants are known to follow a 24-hour circadian rhythm based on the availability of natural light. As such, it is desirable to provide periods in which little or no light is provided to the potted plants 124 to accommodate this circadian rhythm. Thus, the light sets 158 can be deactivated (or reduced in intensity) during the desired "sleep" periods. As stated above, when the closure 108 is in the closed position, the closure 108 cooperates with the enclosure 102 to substantially exclude external light from the interior volume 10 to maintain the potted plants 124 in relative darkness when the light sets 158 are deactivated or reduced in intensity. When constructed from suitable materials, plant cultivation systems 100 as described herein may be used either indoors or outdoors, and may use solar power. Plant cultivation systems 100 intended for outdoor use may be provided with anchoring arrangements to secure them to the ground, and may also be provided with a locking mechanism to secure the closure 108 in the closed position.

In preferred embodiments, many of the functions of the plant cultivation system 100 are electronically controlled, for example by a suitably programmed general purpose computer (which may be, for example a tablet, smartphone or Arduino-type device), a microcontroller or PLC, or a purpose-built control circuit. For example, the motor and gearing mechanism 112 for the closure 108 may be controlled by a timer which prevents the closure from being moved into the open position during the desired "sleep" periods so as to avoid disrupting the circadian rhythms of the potted plants 124, and the light sets 158 may also be controlled by a timer. Similarly, the provision of water from the reservoir 134 to the basins 126 (e.g. by pump 132) may also be controlled by a timer, as may be a periodic flush of the reservoir 134/basins 126 to an external sink via the valve-controlled outlet 188. Switches, buttons and/or other suitable interfaces may be provided for controlling the electronic functions of the plant cultivation system 100; alternatively or additionally, those functions may be coupled (e.g. by wired connection or wireless connection such as Wi-Fi or BLUETOOTH^{®}) to an external computer executing a suitable software application (e.g. a smartphone or tablet running a bespoke app). Preferably, operation of the plant cultivation system 100 is substantially entirely automated. For example, the reservoir 134 may include a level sensor (not shown) and can be coupled by an automated valve to a water source for automatic refilling, or a user may be alerted (e.g. by a text message, e-mail or other alert) that the reservoir 134 is depleted and must be refilled. With automated operation, a user need only attend to reservoir management and removal of mature plants and installation of new plants, and can otherwise simply open the closure 108 to harvest fruit or vegetables while the plants remain within the enclosure. Because the plant support staircases 120 are carried by the turntable 150, they can be rotated within the enclosure 102 so that the fruit and/or vegetables can be more easily reached through the access port 106.

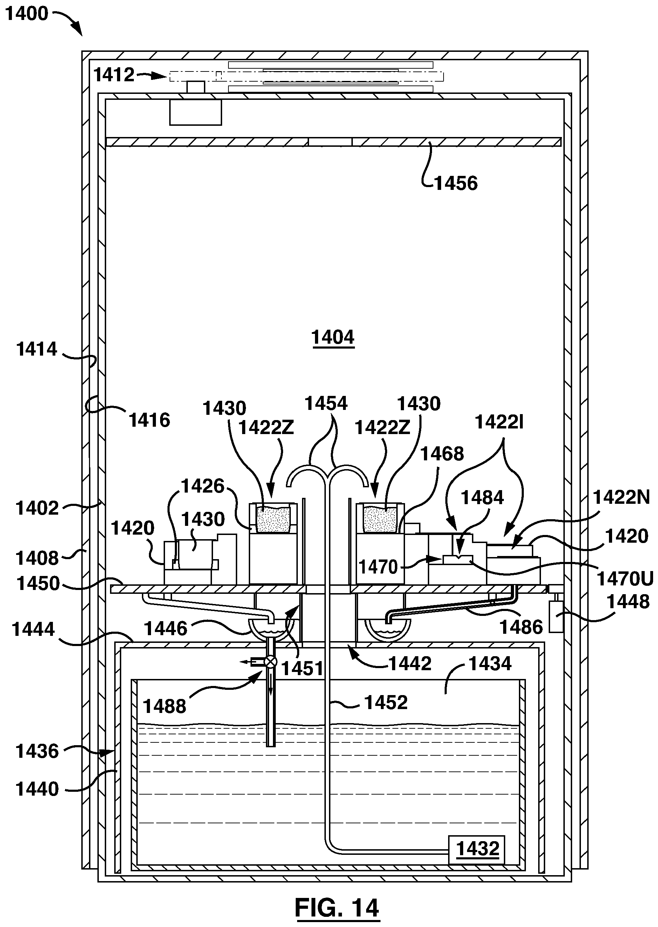

Reference is now made to Figures 14 through 16B, which show a second exemplary plant cultivation system 1400 according to an aspect of the present disclosure. As can be seen in Figures 14 through 16B, like the first exemplary plant cultivation system 100, the second exemplary plant cultivation system 1400 comprises a plurality of plant support staircases 1420. Each plant support staircase 1420 comprises a plurality of distinct individual plant receptacles 14221, 1422Z, 1422N including a zenith plant receptacle 1422Z and a nadir plant receptacle 1422N, with each plant receptacle 14221, 1422Z, 1422N comprising a basin 1426, 1426PN, 1426N adapted to contain water. The plant receptacles 14221, 1422Z, 1422N are arranged descendingly from the zenith plant receptacle 1422Z to the nadir plant receptacle 1422N, and the plant receptacles 14221, 1422Z, 1422N are horizontally stepped so that each plant receptacle 14221, 1422Z, 1422N is vertically unobstructed by each ascendingly adjacent plant receptacle 14221, 1422Z, 1422N. As with the first exemplary plant cultivation system 100, in the second exemplary plant cultivation system 1400 the plant receptacles 14221, 1422Z, 1422N are configured so that water supplied to the zenith basin cascades down the plant support staircase through descendingly adjacent basins toward the nadir basin 1426N.

The second exemplary plant cultivation system 1400 is generally similar to the first exemplary plant cultivation system 100 described above in the context of Figures 1 through 13B, and therefore like reference numerals denote like features except with the prefix "14" instead of "1". As such, the enclosure of the second exemplary plant cultivation system 1400 is denoted by reference 1402, the interior volume of the second exemplary plant cultivation system 1400 is denoted by reference 1404, and so on. Given the foregoing numbering convention, the similarities in construction of the second exemplary plant cultivation system 1400 and the first exemplary plant cultivation system 100 will be apparent from the drawings, particularly by comparing Figures 1 and 4 to Figures 15 and 14, respectively, and for purposes of brevity most of these similarities will not be explicitly repeated.

The second exemplary plant cultivation system 1400 differs from the first exemplary plant cultivation system 100 primarily in the construction of the plant support staircase, the water supply and drainage systems and the turntable drive system, as will be discussed in greater detail below.

In the second exemplary plant cultivation system 1400, as best seen in Figure 14, the turntable 1450 is rotatably supported on the superior end surface 1444 of the support 1436 by a hollow axle 1451, rather than by the motor and gearing mechanism as in the first exemplary plant cultivation system 100. Various suitable constructions of the hollow axle 1451 are contemplated; for example the hollow axle may comprise two telescoping hollow flanged shafts coupled by intervening bearings, with one shaft fixed to the turntable 1450 at the upper end of the axle 1451 and the other shaft fixed to the superior end surface 1444 of the support 1436 at the other end of the axle 1451. As best seen in Figure 14, in the second exemplary plant cultivation system 1400, a motor and gearing mechanism 1448 is interposed between the enclosure 1402 and the turntable 1450 to drive rotation of the turntable 1450. In the illustrated embodiment, the motor is supported by the enclosure 1402 and carries a toothed gearwheel that meshes with corresponding teeth on the outer edge of the turntable 1450; other drive arrangements are also contemplated.

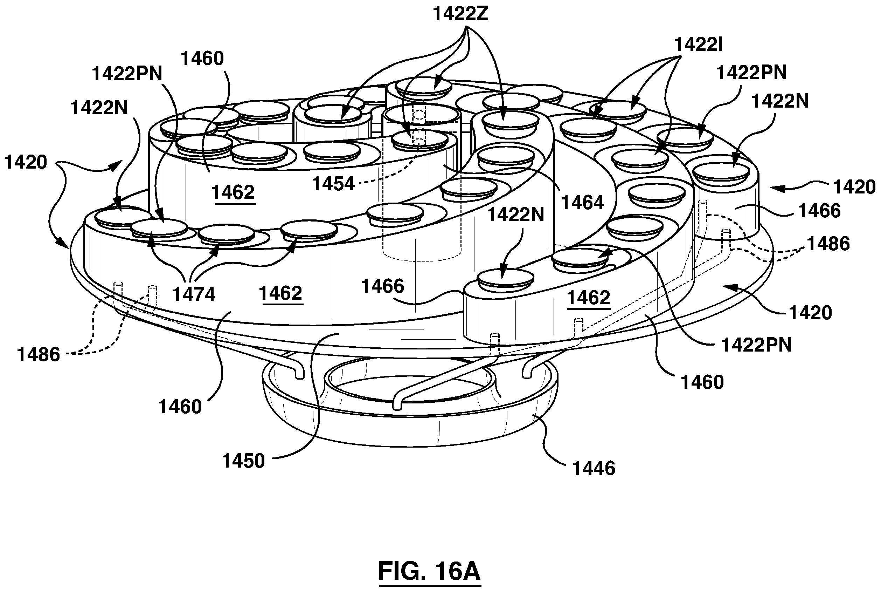

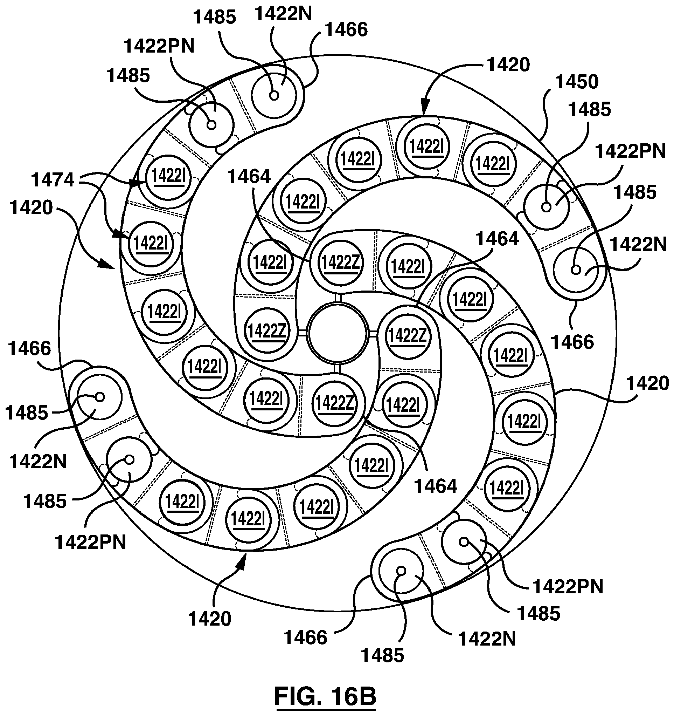

As best seen in Figures 14 and 16, in the second exemplary plant cultivation system 1400, the annular trough 1446, although still in registration with the axially aligned opening 1442 in the superior end surface 1444 of the support 1436, is much smaller than in the first exemplary plant cultivation system 100. A substantially rigid fluid conduit 1452 passes up through the axially aligned opening 1442 and the hollow axle 1451 for fluid communication of water from the reservoir 1434 to the zenith basins, that is, the basins 1426 of the zenith plant receptacles 1422Z, via feeder tubes 1454 (Figure 14) that release water above respective ones of the zenith basins. The turntable 1450, and the plant support staircases 1420, can rotate freely around the fluid conduit 1452. Suitable sensors, circuitry or computer programming (or a combination of any of these) can be used to control operation of the pump 1432 and the motor and gearing mechanism 1448 to avoid supplying water unless the zenith basins are aligned with the feeder tubes 1454.

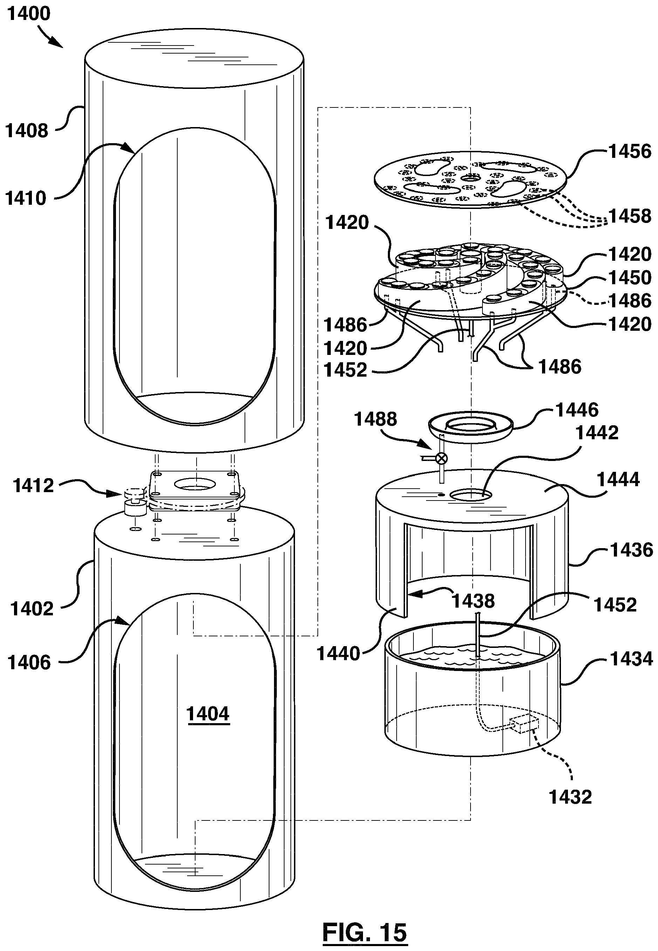

Whereas in the first exemplary plant cultivation system 100 the upper edges of the sidewalls 162 of the staircase frame 160 are discretely stepped (see Figures 9A to 9C), in the second exemplary plant cultivation system 1400 the upper edges of the sidewalls 1462 of the staircase frame 1460 have a smooth slope descending from the zenith end wall 1464 toward the nadir end wall 1466. This can be seen in Figures 15, 16A and 17A to 17F.

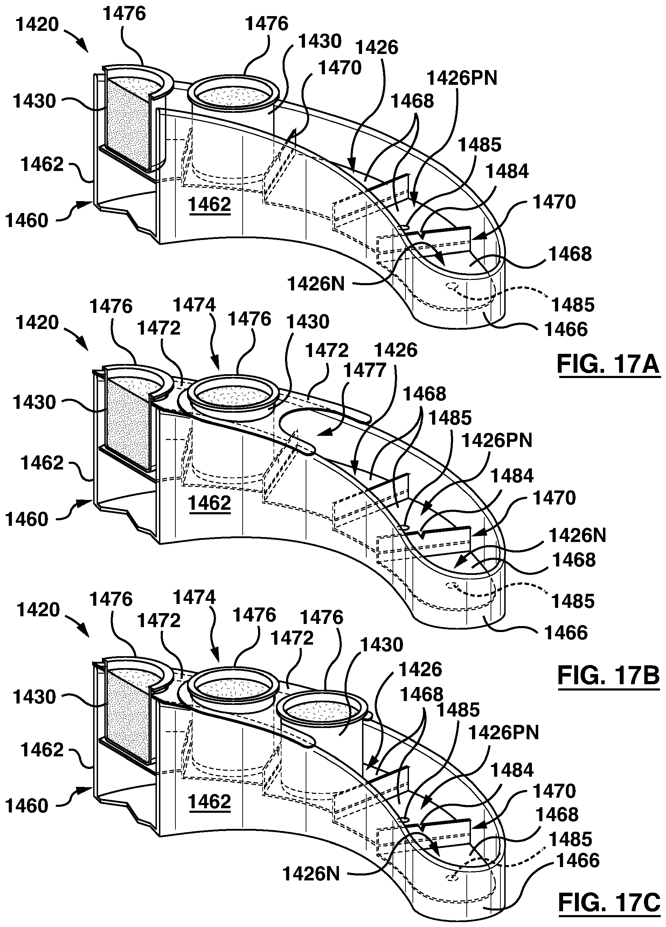

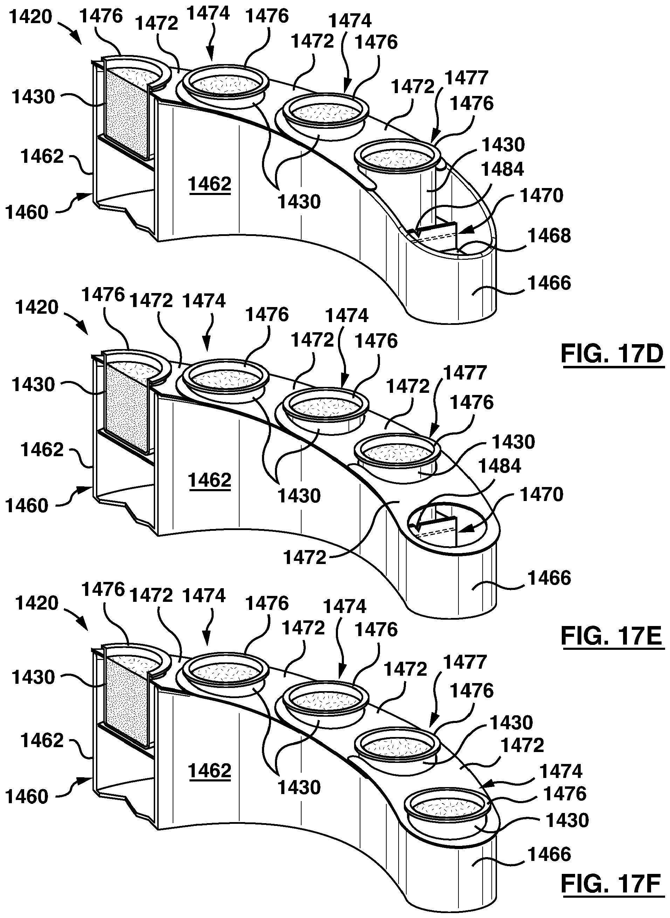

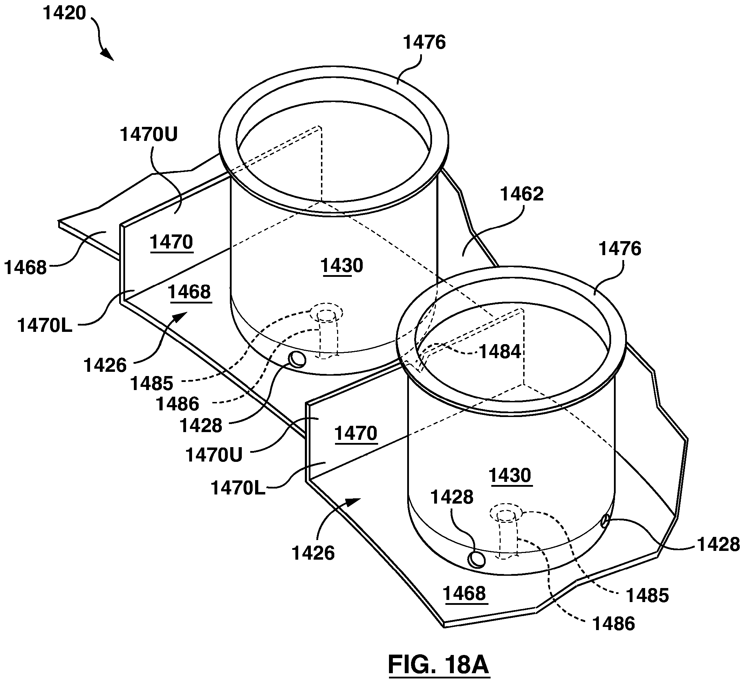

Reference is now made specifically to Figures 17A to 18B, which show aspects of the interior structure of the plant support staircase 1420. In the second exemplary plant cultivation system 1400, within each plant support staircase 1420, only the basin divider wall 1470 between the pre-nadir basin 1426PN and the nadir basin 1426N has a cascade drain 1484, namely a V-shaped notch 1484 in the superior portion 1470U of the basin divider wall 1470. The other basin divider walls 1470 omit any specific cascade drain, and instead water supplied to the zenith basin cascades down the plant support staircase 1420 by overflowing the superior portions 1470U of the basin divider walls 1470 into respective descendingly adjacent ones of the basins 1426 toward the nadir basin 1426N. The basins 1426, 1426PN, 1426N are adapted to contain water so that it that can be absorbed by way of apertures 1428 at the base of a plant pot 1430 (see Figures 18A through 18C).

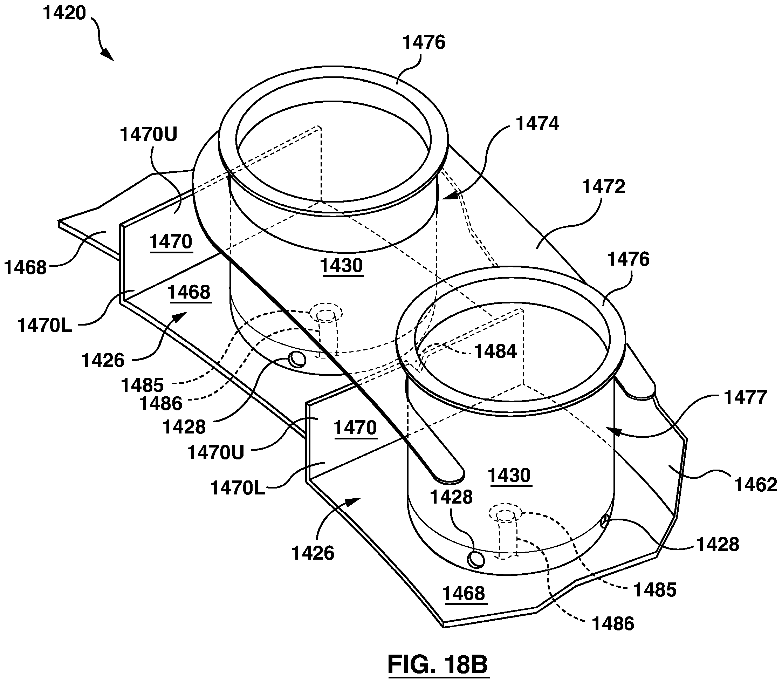

As best seen in Figures 18A and 18B, the nadir basin 1426N and the pre-nadir basin 1426PN each have a terminal drain 1485 leading into tubing 1486 that depends into the annular trough 1446 (see Figures 15 and 16A). As indicated above, the plant support staircases 1420 are carried by a turntable 1450 that can rotate relative to the support 1436; the tubing 1486 will traverse the annular trough 1446 as the turntable 1450 rotates so that water draining from the nadir basin 1426N and the pre-nadir basin 1426PN will be collected in the annular trough 1446 regardless of the rotational position of the turntable 1450. The cascade drain 1484 between the pre-nadir basin 1426PN and the nadir basin 1426N enables water to reach the nadir basin 1426N rather than draining off from the pre-nadir basin 1426PN.

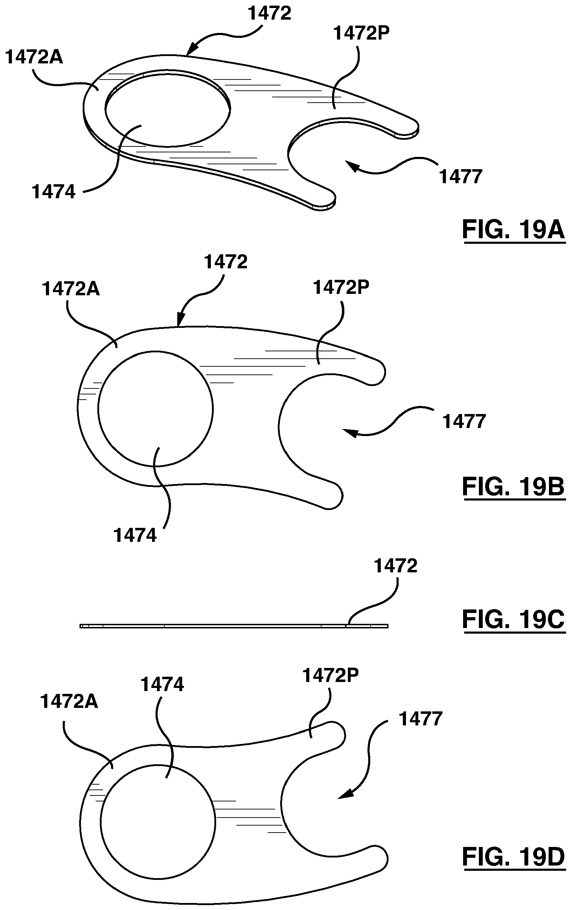

Referring now to Figures 17D to 17F and Figures 19A to 19D, each plant support staircase 1420 further comprises a plurality of basin shields 1472 for the plant receptacles 1422Z, 14221 and 1422N, respectively. The basin shields 1472 are supported by the staircase frame 1460 in registration with a respective one of the basins 1426. Each of the basin shields 1472 is generally planar, and comprises an annular portion 1472A enclosing a pot aperture 1474 and a penannular portion 1474P forming a pot recess 1477. The basin shields 1472 can be arranged to cover the basins 1426 by resting the basin shields 1472 on the upper edges of the sidewalls 1462 so that the annular portion 1472A and the penannular portion 1474P overlap and the pot aperture 1474 is in registration with the pot recess 1477 of an adjacent basin shield 1472. In this overlapping arrangement, the basin shields 1472 will cooperate with one another and with the annular flange 1476 on the plant pot 1430 to exclude light from the basins 1426. The annular portion 1472A is shaped to effectively cover both the zenith basin and the nadir basin. In the embodiment shown, the plant pots 1430 may rest on the basin floor 1468 rather than being supported by the basin shields 1472. The plant pots 1430 can be indexed along the plant support staircase by lifting away the basin shields 1472, moving the plants, and then returning the basin shields 1472.

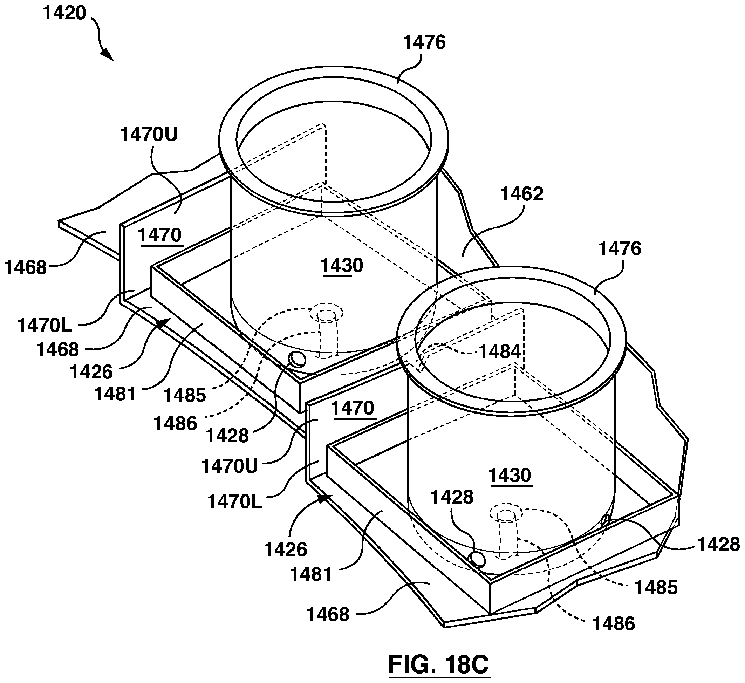

As shown in Figure 18C, in some exemplary embodiments the basins 1426 comprise removable trays 1481. Trays for the pre-nadir basin 1426PN and the nadir basin 1426N would include drainage apertures in registration with the respective terminal drains 1485. In the illustrated embodiment shown in Figure 18C, there is one distinct individual tray 1481 for each basin 1426; in other embodiments there may be one or more inserts each comprising a plurality of trays and fitted to the sidewalls 1462 of the staircase frame 1460, the superior portions 1470U of the basin divider walls 1470 and the basin floors 1468. The use of removable trays facilitates maintenance, since they can be removed for cleaning or replacement.

It will be appreciated that the enclosure arrangements specifically described and illustrated herein (e.g. enclosure 102 and closure 108; enclosure 1402 and closure 1408) are merely examples of suitable arrangements for selectively excluding light; any suitable light exclusion arrangement may be used. For example, a suitable arrangement of blackout curtains may be used, or a substantially light-tight box with a light-excluding hinged door may be used. Similarly, the shape, arrangement and configuration of the illustrated plant support staircases (e.g. plant support staircases 120, 1420) are merely non-exhaustive examples, and are not intended to exclude other shapes, arrangements and/or configurations.

Certain currently preferred embodiments have been described by way of example. It will be apparent to persons skilled in the art that a number of variations and modifications can be made without departing from the scope of the claims.

## Claims

1. A plant cultivation system (100, 1400), comprising:
at least one plant support staircase (120, 1420);
each plant support staircase comprising a plurality of distinct individual plant receptacles (122Z, 1422Z, 1221, 14221, 122N, 1422N) including a zenith plant receptacle (122Z, 1422Z) and a nadir plant receptacle (122N, 1422N);
each plant receptacle (126, 1426PN, 1426N) comprising a water basin adapted to contain water;
the plant receptacles arranged descendingly from the zenith plant receptacle to the nadir plant receptacle;
the plant receptacles being horizontally stepped so that each plant receptacle is vertically unobstructed by each ascendingly adjacent plant receptacle;
wherein the plant receptacles are configured so that water supplied to a zenith basin (126) cascades down the plant support staircase through descendingly adjacent basins toward a nadir basin (126, 1426N);
the plant cultivation system further comprising:
an enclosure (102, 1402) defining an interior volume;
the enclosure having an access port (106, 1406) opening into the interior volume (104, 1404);
a closure (108, 1408) movably coupled to the enclosure, the closure being movable between:
a closed position obstructing the access port; and
an open position permitting access to the interior volume through the access port;
wherein the at least one plant support staircase is disposed within the interior volume;
**characterized in that**:
when the closure is in the closed position, the closure cooperates with the enclosure to substantially exclude external light from the interior volume while airflow into and out of the interior volume is permitted; and **in that** at least one light source disposed within the interior volume and adapted to illuminate the plant receptacles;
wherein the at least one light source comprises a respective light set (158, 1458) for each plant receptacle; and
each light set is arranged in registration with its respective plant receptacle.

2. The plant cultivation system of claim 1, wherein the basins (1426) comprise removable trays (1481).

3. The plant cultivation system of claim 1 or 2, wherein water supplied to the zenith basin cascades down the plant support staircase through one of:
cascade drains (184, 1484) feeding into respective descendingly adjacent ones of the basins;
overflowing into respective descendingly adjacent ones of the basins.

4. The plant cultivation system of any one of claims 1, 2 or 3, wherein:
the light sets in registration with the zenith plant receptacle emit spring-like light in which blue and yellow wavelengths predominate; and
the light sets in registration with the nadir plant receptacle emit fall-like light in which reddish and orange wavelengths predominate.

5. The plant cultivation system of any one of claims 1, 2, 3 or 4, wherein:
the at least one plant support staircase is rotatable within the enclosure; and
the light sets are carried by a fixture (156, 1456) disposed within the enclosure and configured to rotate in synch with the at least one plant support staircase to maintain each light set in registration with its respective plant receptacle.

6. A plant cultivation system of any one of claims 1, 2, 3, 4 or 5, further comprising:
a reservoir (134, 1434) coupled, via a flow control element, in fluid communication with the basins and adapted to selectively supply water to the basins;
wherein, for each plant support staircase:
the reservoir is in fluid communication with a zenith basin;
each basin, other than a nadir basin, has a cascade drain feeding into its respective descendingly adjacent basin;
whereby water supplied from the reservoir to the zenith basin cascades down the plant support staircase through the basins into the nadir basin;
the nadir basin has a terminal drain; and
the terminal drain (186, 1486) is valve-controlled for selectively directing water from the nadir basin back to the reservoir or to a sink.

7. The plant cultivation system of claim 6, wherein:
the reservoir is disposed above the basins; and
the flow control element comprises a valve.

8. The plant cultivation system of claim 6, wherein:
the flow control element comprises a pump (132); and
the reservoir is disposed within the enclosure below the basins.

9. The plant cultivation system of any of claims 1, 2, 3, 4, 5, 6, 7 or 8, wherein each plant support staircase is curved.

10. The plant cultivation system of claim 9, wherein the at least one plant
support staircase comprises a plurality of plant support staircases radiating from a common center, preferably four plant support staircases in a quadrelion arrangement.

11. The plant cultivation system of any one of claims 1, 2, 3, 4, 5, 6, 7, 8 or 9, wherein each plant support staircase comprises:
a staircase frame (160, 1460);
a basin shield (172, 172Z, 172N, 1472) for each plant receptacle, each basin shield being supported, preferably removably supported, by the staircase frame in registration with a respective one of the basins;
each basin shield having a pot support aperture (174, 174Z, 1474) formed therein and adapted to receive a plant pot (130, 1430);
wherein when a plant pot is received and supported in the pot support aperture, the basin shield and the staircase frame cooperate to substantially exclude light from the respective basin.

## Patentansprüche

1. Pflanzenzuchtsystem (100, 1400), umfassend:
mindestens eine Pflanzenträgertreppe (120, 1420);
wobei jede Pflanzenträgertreppe mehrere verschiedene einzelne Pflanzenbehälter (122Z, 1422Z, 122I, 1422I, 122N, 1422N) umfasst, die einen Zenit-Pflanzenbehälter (122Z, 1422Z) und einen Nadir-Pflanzenbehälter (122N, 1422N) aufweisen;
wobei jeder Pflanzenbehälter (126, 1426PN, 1426N) ein Wasserbecken umfasst, das ausgelegt ist, um Wasser zu enthalten;
wobei die Pflanzenbehälter von dem Zenit-Pflanzenbehälter zu dem Nadir-Pflanzenbehälter absteigend angeordnet sind;
wobei die Pflanzenbehälter derart horizontal abgestuft sind, dass jeder Pflanzenbehälter durch jeden aufsteigenden benachbarten Pflanzenbehälter vertikal unversperrt ist;
wobei die Pflanzenbehälter derart eingerichtet sind, dass Wasser, welches einem Zenit-Becken (126) zugeführt wird, die Pflanzenträgertreppe über absteigende benachbarte Becken hin zu einem Nadir-Becken (126, 1426N) in Kaskaden herabfließt;
wobei das Pflanzenzuchtsystem ferner umfasst:
ein Gehäuse (102, 1402), welches ein Innenvolumen definiert;
wobei das Gehäuse eine Zugriffsöffnung (106, 1406) aufweist, die in das Innenvolumen (104, 1404) öffnet;
einen Verschluss (108, 1408), der mit dem Gehäuse bewegbar gekoppelt ist, wobei der Verschluss bewegbar ist zwischen:
einer geschlossenen Position, in welcher er die Zugriffsöffnung versperrt; und
einer offenen Position, in welcher er einen Zugriff auf das Innenvolumen über die Zugriffsöffnung erlaubt;
wobei die mindestens eine Pflanzenträgertreppe innerhalb des Innenvolumens angeordnet ist;
**dadurch gekennzeichnet, dass**:
wenn sich der Verschluss in der geschlossenen Position befindet, der Verschluss mit dem Gehäuse zusammenwirkt, um externes Licht von dem Innenvolumen im Wesentlichen auszuschließen, während ein Luftstrom in das und aus dem Innenvolumen erlaubt wird;
und darin, dass mindestens eine Lichtquelle innerhalb des Innenvolumens angeordnet und ausgelegt ist, um die Pflanzenbehälter zu beleuchten;
wobei die mindestens eine Lichtquelle einen jeweiligen Lichtsatz (158, 1458) für jeden Pflanzenbehälter umfasst; und
wobei jeder Lichtsatz in Deckung mit seinem jeweiligen Pflanzenbehälter angeordnet ist.

2. Pflanzenzuchtsystem nach Anspruch 1, wobei die Becken (1426) entfernbare Einsätze (1481) umfassen.

3. Pflanzenzuchtsystem nach Anspruch 1 oder 2, wobei Wasser, welches dem Zenit-Becken zugeführt wird, die Pflanzenträgertreppe in Kaskaden herabfließt durch:
Kaskadenabflüsse (184, 1484), die in jeweilige absteigende benachbarte Becken führen; oder
Überlaufen in jeweilige absteigende benachbarte Becken.

4. Pflanzenzuchtsystem nach einem der Ansprüche 1, 2 oder 3, wobei:
die Lichtsätze in Deckung mit dem Zenit-Pflanzenbehälter frühlingshaftes Licht emittieren, in dem blaue und gelbe Wellenlängen überwiegen; und
die Lichtsätze in Deckung mit dem Nadir-Pflanzenbehälter herbstliches Licht emittieren, in dem rötliche und orange Wellenlänge überwiegen.

5. Pflanzenzuchtsystem nach einem der Ansprüche 1, 2, 3 oder 4, wobei:
die mindestens eine Pflanzenträgertreppe innerhalb des Gehäuses drehbar ist; und
die Lichtsätze durch eine Halterung (156, 1456) getragen sind, die innerhalb des Gehäuses angeordnet und eingerichtet ist, um sich in Synchronisation mit der mindestens einen Pflanzenträgertreppe zu drehen, um jeden Lichtsatz in Deckung mit seinem jeweiligen Pflanzenbehälter zu halten.

6. Pflanzenzuchtsystem nach einem der Ansprüche 1, 2, 3, 4 oder 5, ferner umfassend:
einen Speicher (134, 1434), der, über ein Strömungssteuerelement, in Fluidkommunikation mit den Becken gekoppelt und ausgelegt ist, um den Becken selektiv Wasser zuzuführen;
wobei für jede Pflanzenträgertreppe:
der Speicher in Fluidkommunikation mit einem Zenit-Becken steht;
jedes Becken, welches kein Nadir-Becken ist, einen Kaskadenabfluss aufweist, der in das jeweilige absteigende benachbarte Becken führt;
wodurch Wasser, welches von dem Speicher zu dem Zenit-Becken zugeführt wird, die Pflanzenträgertreppe über die Becken in das Nadir-Becken in Kaskaden herabfließt;
das Nadir-Becken einen Endabfluss aufweist; und
der Endabfluss (186, 1486) ventilgesteuert wird, um Wasser von dem Nadir-Becken zurück zu dem Speicher oder zu einer Senke selektiv zu leiten.

7. Pflanzenzuchtsystem nach Anspruch 6, wobei:
der Speicher über den Becken angeordnet ist; und
das Strömungssteuerelement ein Ventil umfasst.

8. Pflanzenzuchtsystem nach Anspruch 6, wobei:
das Strömungssteuerelement eine Pumpe (132) umfasst; und
der Speicher innerhalb des Gehäuses unter den Becken angeordnet ist.

9. Pflanzenzuchtsystem nach einem der Ansprüche 1, 2, 3, 4, 5, 6, 7 oder 8, wobei jede Pflanzenträgertreppe gekrümmt ist.

10. Pflanzenzuchtsystem nach Anspruch 9, wobei die mindestens eine Pflanzenträgertreppe mehrere Pflanzenträgertreppen, die von einer gemeinsamen Mitte ausgehen, vorzugsweise vier Pflanzenträgertreppen in einer Quadrelion-Anordnung umfasst.

11. Pflanzenzuchtsystem nach einem der Ansprüche 1, 2, 3, 4, 5, 6, 7, 8 oder 9, wobei jede Pflanzenträgertreppe umfasst:
einen Treppenrahmen (160, 1460);
eine Beckenabschirmung (172, 172Z, 172N, 1472) für jeden Pflanzenbehälter, wobei jede Beckenabschirmung durch den Treppenrahmen in Deckung mit einem jeweiligen der Becken, vorzugsweise entfernbar, getragen ist;
wobei jede Beckenabschirmung eine Topfträgeröffnung (174, 174Z, 1474) aufweist, die darin gebildet und ausgelegt ist, um einen Pflanzentopf (130, 1430) aufzunehmen;
wobei, wenn ein Pflanzentopf in der Topfträgeröffnung aufgenommen und getragen ist, die Beckenabschirmung und der Treppenrahmen zusammenwirken, um Licht von dem jeweiligen Becken im Wesentlichen auszuschließen.

## Revendications

1. Système de culture de plantes (100, 1400), comprenant :
au moins un escalier de support de plantes (120, 1420) ;
chaque escalier de support de plantes comprenant des réceptacles de plante individuelle distincts (122Z, 1422Z, 122I, 1422I, 122N, 1422N) incluant un réceptacle de plante zénithal (122Z, 1422Z) et un réceptacle de plante nadiral (122N, 1422N) ;
chaque réceptacle de plante (126, 1426PN, 1426N) comprenant un bassin à eau adaptée pour contenir de l'eau ;
les réceptacles de plante étant agencés dans le sens descendant du réceptacle de plante zénithal au réceptacle de plante nadiral ;
les réceptacles de plante étant échelonnés horizontalement de telle façon que chaque réceptacle de plante est dégagé verticalement par chaque réceptacle de plante adjacent dans le sens ascendant ;
dans lequel les réceptacles de plante sont configurés de telle façon que l'eau alimentée vers un bassin zénithal (126) s'écoule en cascade vers le bas de l'escalier de support de plantes à travers des bassins adjacents dans le sens descendant vers un bassin nadiral (126, 1426N) ;
le système de culture de plantes comprenant en outre :
une enceinte (102, 1402) définissant un volume intérieur ;
l'enceinte présentant un orifice d'accès (106, 1406) débouchant sur le volume intérieur (104, 1404) ;
une fermeture (108, 1408) accouplée de façon mobile à l'enceinte, la fermeture étant déplaçable entre :
une position fermée obstruant l'orifice d'accès ; et
une position ouverte permettant d'accéder au volume intérieur par l'orifice d'accès ;
dans lequel l'au moins un escalier de support de plantes est disposé dans le volume intérieur ;
**caractérisé en ce que** :
lorsque la fermeture est dans la position fermée, la fermeture coopère avec l'enceinte pour exclure substantiellement la lumière extérieure du volume intérieur tout en permettant l'écoulement d'air vers le volume intérieur et hors de celui-ci ;
et **en ce que** au moins une source de lumière disposée dans le volume intérieur et adaptée pour éclairer les réceptacles de plante ;
dans lequel l'au moins une source de lumière comprend un ensemble de lumières respectif (158, 1458) pour chaque réceptacle de plante ; et
chaque ensemble est agencé en alignement avec son réceptacle de plante respectif.

2. Système de culture de plantes selon la revendication 1, dans lequel les bassins (1426) comprennent des plateaux amovibles (1481).

3. Système de culture de plantes selon la revendication 1 ou 2, dans lequel de l'eau alimentée vers le bassin nadiral s'écoule en cascade vers le bas de l'escalier de support de plantes à travers l'un des éléments suivants :
des drains de cascade (184, 1484) alimentant des bassins respectifs adjacents dans le sens descendant ;
le débordement vers des bassins respectifs adjacents dans le sens descendant.

4. Système de culture de plantes selon l'une quelconque des revendications 1, 2 ou 3, dans lequel :
les ensembles de lumières en alignement avec le réceptacle de plante zénithal émettent une lumière printanière, dans laquelle des longueurs d'ondes bleues et jaunes prédominent ; et
les ensembles de lumières en alignement avec le réceptacle de plante nadiral émettent une lumière automnale, dans laquelle des longueurs d'ondes rougeâtres et oranges prédominent.

5. Système de culture de plantes selon l'une quelconque des revendications 1, 2, 3 ou 4, dans lequel :
l'au moins un escalier de support de plantes est rotatif à l'intérieur feux de l'enceinte ; et
les ensembles de lumières sont supportés par une monture (156, 1456) disposée dans l'enceinte et configurée pour tourner en synchronisation avec l'au moins un escalier de support de plantes pour maintenir chaque ensemble de lumières en alignement avec son réceptacle de plante respectif.

6. Système de culture de plantes selon l'une quelconque des revendications 1, 2, 3, 4 ou 5, comprenant en outre :
un réservoir (134, 1434) accouplé, par le biais d'un élément de commande d'écoulement, en communication fluidique avec les bassins et adapté pour alimenter les bassins en eau de manière sélective ;
dans lequel, pour chaque escalier de support de plantes :
le réservoir est en communication fluidique avec un bassin zénithal ;
chaque bassin, autre qu'un bassin nadiral, présente un drain de cascade alimentant son bassin adjacent respectif dans le sens descendant;
moyennant quoi de l'eau alimentée à partir du réservoir vers le bassin zénithal s'écoule en cascade vers le bas de l'escalier de support de plantes à travers les bassins et dans le bassin nadiral ;
le bassin nadiral présente un drain terminal ; et
le drain terminal (186, 1486) est commandé par soupape pour rediriger sélectivement de l'eau à partir du bassin nadiral vers le réservoir ou vers une vasque.

7. Système de culture de plantes selon la revendication 6, dans lequel :
le réservoir est disposé au-dessus des bassins ; et
l'élément de commande d'écoulement comprend une soupape.

8. Système de culture de plantes selon la revendication 6, dans lequel :
l'élément de commande d'écoulement comprend une pompe (132) ; et
le réservoir est disposé à l'intérieur de l'enceinte sous les bassins.

9. Système de culture de plantes selon l'une quelconque des revendications 1, 2, 3, 4, 5, 6, 7 ou 8, dans lequel chaque escalier de support de plantes est courbé.

10. Système de culture de plantes selon la revendication 9, dans lequel l'au moins un escalier de support de plantes comprend une pluralité d'escaliers de support de plantes partant d'un centre commun, de préférence quatre escaliers de support de plantes dans un agencement en quadrelion.

11. Système de culture de plantes selon l'une quelconque des revendications 1, 2, 3, 4, 5, 6, 7, 8 ou 9, dans lequel chaque escalier de support de plantes comprend :
un cadre d'escalier (160, 1460) ;
une protection de bassin (172, 172Z, 172N, 1472) pour chaque réceptacle de plante, chaque protection de bassin étant supportée, de préférence supportée de façon amovible, par le cadre d'escalier en alignement avec l'un respectif des bassins ;
chaque protection de bassin présentant une ouverture de support de pot (174, 174Z, 1474) formée dans celle-ci et adaptée pour recevoir un pot de plante (130, 1430) ;
dans lequel, lorsqu'un pot de plante est reçu et supporté dans l'ouverture de support de pot, la protection de bassin et le cadre d'escalier coopèrent pour exclure substantiellement la lumière du bassin respectif.
